# EUROPÄISCHE PATENTANMELDUNG

(11) **EP 1 252 815 A2**
(43) Veröffentlichungstag der Anmeldung: **30.10.2002**
(21) Anmeldenummer: 02002573.0
(22) Anmeldetag: 04.02.2002
(51) Int. Cl.: A01G 13/10

(54) **Vorrichtung zum Schutz von Pflanzen vor Schneckenfrass**

(30) Priorität: 26.04.2001 CH 7632001
(71) Anmelder: Keck, Hermann, Dr., CH-4106 Therwil/Basel (CH)
(72) Erfinder: Keck, Hermann, Dr., CH-4106 Therwil/Basel (CH)
(74) Vertreter: Wilhelms, Rolf E., Dr.

(57) **Zusammenfassung**

Die vorliegende Erfindung betrifft eine Vorrichtung zum Schutz von Pflanzen vor Frass durch Schnecken oder andere Weichtiere.

Diese Vorrichtung besteht aus mehreren Segmenten (1) die durch scharnierartige Verbindungen (4) und (5) mit einander verbunden sind und variabel in Winkeln von 30°-230° bewegt werden können.An der senkrechten Wand (1) werden Nadelbänder (2) so befestigt,dass deren Nadeln (2) entweder senkrecht nach oben oder schräg nach oben oder waagerecht nach aussen oder schräg nach unten oder senkrecht nach unten zeigen können.

Diese Reihen von spitzen Nadeln (2) bilden ein unüberwindliches Hindernis für die Schnecken,sodass sie die Wand (1) nicht überwinden und nicht zu den zu schützenden Pflanzen gelangen können.

## Beschreibung

Die vorliegende Erfindung betrifft eine Vorrichtung,mit der wertvolle Nutzpflanzen vor Schaden durch Frass von Schnekken oder anderen Weichtieren geschützt werden können.

Es ist bekannt,dass noch immer giftige Mittel,wie Schneckenkörner,zum Schutz von Pflanzen vor Schneckenfrass benutzt werden.Diese haben den Nachteil,dass sie auch für andere Tiere schädlich und ausserdem nur zeitlich begrenzt wirksam sind,da sie durch Regen und Giesswasser gelöst und somit unwirksam werden.Auch das Aufstellen von mit Bier gefüllten Gefässen erzielt nur geringen Erfolg,weil viele Schnecken, nachdem sie Bier getrunken haben,sich zurückziehen und nicht, wie gewünscht,im Bier ertrinken.Auch elektrische Zäune sind nur bedingt wirksam,weil durch Regen-bezw.Giesswasser oder herabhängende Pflanzen Kurzschlüsse entstehen.

Eine wesentlich verbesserte Wirkung zeigen Schneckenzäune aus Metall-oder Kunststoffplatten.Diese haben am oberen Ende einen schräg nach unten abgewinkelten oder bogenförmigen Rand oder eine umgekehrt U-förmige Kante mit einem nach unten gerichteten glatten Rand.Da aber Schnecken auch um glatte Ränder kriechen können,wird dieser Nachteil mit der vorliegenden Erfindung dadurch überwunden,dass anstelle der glatten Ränder Nadelbänder angebracht sind,an deren Spitzen die Schnecken beim unten entlang kriechen keinen Halt mehr finden können und deshalb an der,den zu schützenden Pflanzen abgekehrten Aussenseite des Schneckenzaunes herunter fallen.

Im folgenden wird anhand der Zeichnungen der Aufbau und die Wirkungsweise der erfindungsgemässen Vorrichtung erklärt.
- Figur 1: zeigt die Frontalansicht eines Segmentes des Schnekkenzauness
- Figur 2: stellt den seitlichen Querschnitt in der Linie A-B der Wand 1 dar.
- Figur 3: zeigt die Draufsicht auf 5 zusammengesetzte und in verschiedenen Winkeln abgebogenen Segmente.
- Figur 4: zeigt den Querschnitt der Wand 1 bei der Linie A-B, bei der das Nadelband 2 an der oberen Kante der Wand 1 so angebracht ist,dass die Nadeln 2 senkrecht nach oben zeigen.
- Figur 5: zeigt einen Querschnitt der Wand 1 bei der Linie A-B,bei der das Nadelband 2 an der oberen Kante der Wand 1 so angebracht ist,dass die Nadeln 2 schräg nach oben weisen.
- Figur 6: zeigt den Querschnitt der Wand 1 in der Linie A-B bei der das Nadelband 2 an der oberen Kante der Wand 1 so angebracht ist,dass die Nadeln waagerecht nach aussen zeigen.
- Figur 7: zeigt den Querschnitt der Wand 1 bei der Linie A-B bei der das Nadelband 2 so angebracht ist,dass die Nadeln 2 schräg nach unten weisen.

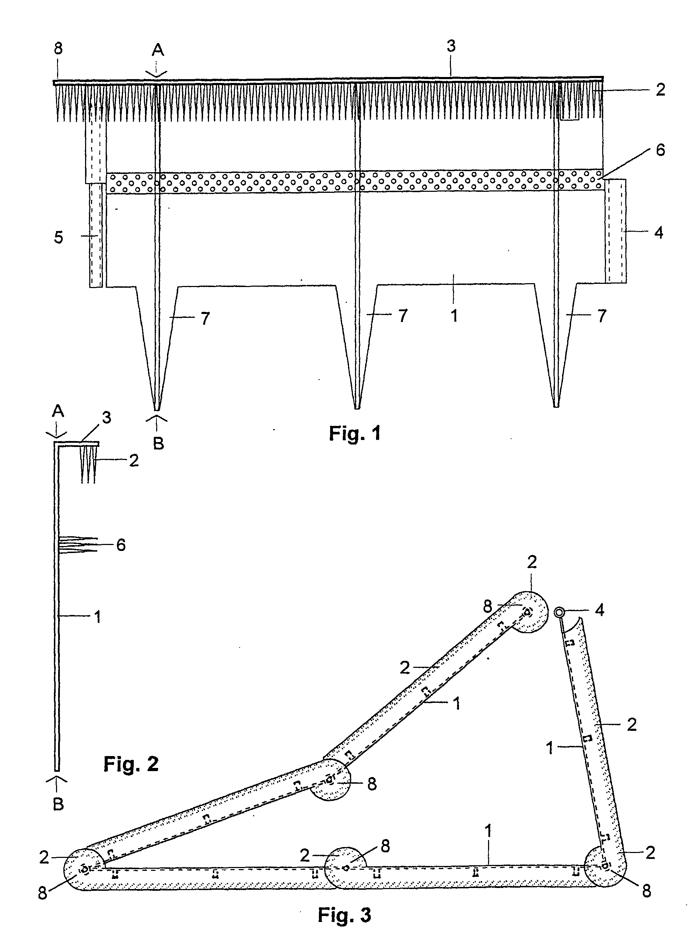

Figur 1 zeigt ein Segment des Schneckenzaunes,bei dem an der oberen Kante der Wand 1 die Platte 3 waagerecht angebracht ist und die Spitzen der Nadeln des Nadelbandes 2,das an der Unterseite der Platte 3 befestigt ist,senkrecht nach unten weisen.

Wenn die Schnecken,vom Boden kommend,an der Wand 1 nach oben kriechen und dann versuchen,das Nadelband zu überwinden, also mit dem Bauch an den Spitzen entlang kriechen müssen, finden sie an den Spitzen keinen Halt und fallen an der Aussenseite des Schutzzaunes herunter,können also nicht an die Innenseite des Schutzzaunes und an die zu schützenden Pflanzen gelangen.

Bei einer weiteren Variante des Schutzzaunes ist das Nadelband 6 in der Mitte der Wand 1 angebracht und die Nadeln zeigen waagerecht nach aussen.Auch hier müssen die Schnecken, wenn sie nach oben kriechen wollen,an den Nadelspitzen entlang kriechen,wobei sie keinen Halt finden werden.Dieses Nadelband kann auch durch ein Band mit z.B.Schmirgelpapier oder Glassplittern ersetzt werden.

Die scharnierartigen Vorrichtungen an beiden äusseren Kanten der Wand 1 bestehen an der einen Kante aus der Hülse 4,die vom unteren Rand der Wand 1 bis zu deren Mitte reicht.An der anderen Kante der Wand 1 befindet sich der Stab 5,dessen untere, dünnere Hälfte in die Hülse 4 eines anderen Segmentes gesteckt werden kann.Beide zusammen bilden die scharnierartige Vorrichtung zur Verbindung von zwei Segmenten die sich dadurch in Winkeln von 30°-230° drehen lassen. Die Hülse 4 und der Stab 5 sind durchgehend bis unten offen, sodass eine dünnere Stange ganz hindurch bis in die Erde gesteckt werden kann.Dadurch erhält das Segment einen verstärkten Halt im Boden.Durch umbiegen der oberen Teile der Stangen lassen sich Bögen zu einem gegenüber liegenden Segment anbringen,an denen ein Folientunnel zur Bildung eines Frühbeetes befestigt werden kann.

Die 3 Spitzen 7 an der unteren Kante der Wand 1 werden in die Erde gesteckt zur Befestigung der Wand 1.

Figur 2 zeigt einen Querschnitt in der Linie A-B durch die Wand 1.Die Platte 3 ist an der oberen Kante der Wand 1 waagerecht angebracht. Das Nadelband 2 ist an der Unterseite der Platte 3 so befestigt,dass die Nadeln,die in 2 oder mehreren parallel verlaufenden Reihen angeordnet sind,nach unten zeigen.Wenn die Schnecken an der senkrecht stehenden Wand 1 hochkriechen und den Schneckenzaun überwinden wollen, müssen sie,umgekehrt,also mit dem Bauch nach oben und mit dem Rücken nach unten, an den Spitzen der Nadeln entlang kriechen.Dort finden sie keinen Halt und fallen aussen herunter,können also nicht auf die Innenseite des Schneckenzaunes gelangen.

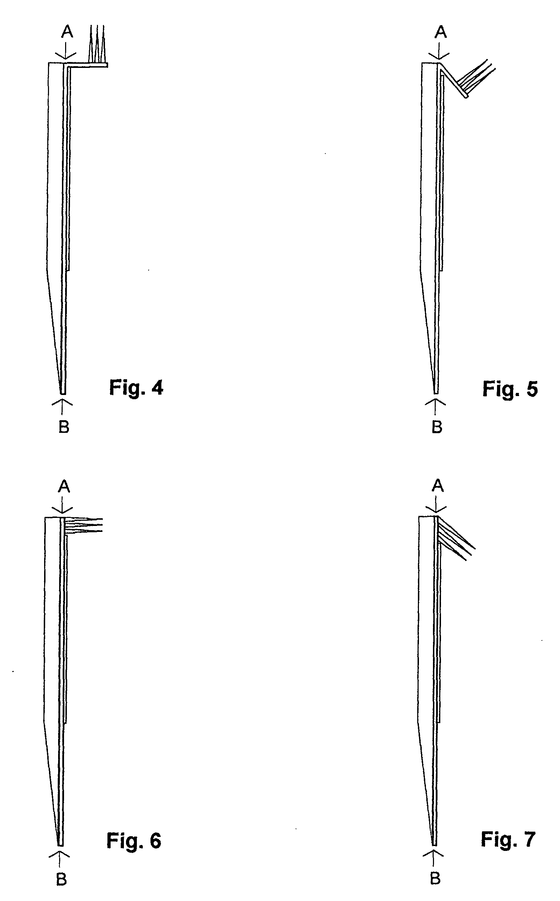

Figur 3 zeigt die Draufsicht auf 5 Segmente des Schneckenzaunes,die durch scharnierartige Verbindungen mit einander verbunden sind und in unterschiedlichen Winkeln von 30°-230° abgebogen werden können.Die oberen Platten 8 sind über den Scharnierstäben 5 kreisförmig ausgebildet,ebenso wie das Nadelband 2.Dadurch wird auch bei den abgewinkelten Formen ein dichter Abschluss erreicht,sodass die Schnecken keine Schlupflöcher finden werden,durch die sie an die, den Pflanzen zugekehrte Seite des Schneckenzaunes gelangen können.

Figur 4 zeigt den Querschnitt der Wand 1 bei der Linie A-B Das Nadelband 2 ist an der oberen Kante der Wand 1 so angebracht,dass die Nadeln 2 senkrecht nach oben zeigen.

Figur 5 zeigt den Querschnitt der Wand 1 bei der Linie A-B.Das Nadelband 2 ist an der oberen Kante der Wand 1 so angebracht,dass die Nadeln 2 schräg nach oben zeigen

Figur 6 zeigt den Querschnitt bei der Linie A-B der Wand 1,bei der das Nadelband 2 an der oberen Kante der Wand 1 so angebracht ist,dass die Nadeln 2 waagerecht nach aussen weisen.

Figur 7 zeigt einen Querschnitt bei der Linie A-B der Wand 1, bei der das Nadelband 2 an der oberen Kante der Wand 1 so angebracht ist,dass die Nadeln 2 schräg nach unten weisen.

## Patentansprüche

1. Vorrichtung zum Schutz von Pflanzen vor Frass von Schnecken oder anderen Weichtieren,**dadurch gekennzeichnet,dass** ein Nadelband (2),bestehend aus zwei oder mehreren parallel verlaufenden Reihen spitzer Nadeln aus Kunststoff oder Metall, die eine beliebige Länge,vorzugsweise 10-15 mm haben und an der oberen Kante einer senkrecht stehenden Wand (1) aus Kunststoff,Metall oder Holz so angebracht ist,dass die Nadeln entweder senkrecht nach oben zeigen oder an der,den zu schützenden Pflanzen abgekehrten Seite der senkrecht stehenden Wand (1) in variablen Winkeln entweder schräg nach oben oder in horizontaler Richtung oder schräg abwärts oder auch senkrecht nachunten zeigen können.

2. Vorrichtung nach Patentanspruch 1,**dadurch gekennzeichnet,dass** das Nadelband (2) an der unteren Seite der waagerechten Platte (3) so angebracht ist,dass die senkrecht nach unten zeigenden Nadeln (2) von der senkrecht stehenden Wand (1) eine Abstand 10-30 mm haben können.

3. Vorrichtung nach Patentanspruch 1 und 2 **dadurch gekennzeichnet, dass** ein Nadelband (2) an der,den zu schützenden Pflanzen abgekehrten Seite der senkrecht stehenden Platte (1) im mittleren Bereich so angebracht ist,dass die Nadeln (2) waagerecht (6) nach aussen stehen.

4. Vorrichtung nach Patentanspruch 1,2 und 3,**dadurch gekennzeichnet,dass** anstelle der Bänder mit Nadeln (2) auch Bänder mit Auflagen von grobem Schmirgelpapier oder spitzen Kristallen, oder scharfen Glassplittern an der Wand (1) angebracht werdende. können.

5. Vorrichtung nach Patentanspruch 1,2 und 3,**dadurch gekennzeichnet,dass** die senkrecht stehende Wand (1) aus Kunststoff,Metall oder Holz,eine Höhe von 8-100 cm,vorzugsweise 12-20 cm und eine Breite von 10-100 cm,vorzugsweise 25 cm haben kann und zur Befestigung im Boden an der unteren Kante mehrere,vorzugsweise drei keilartige Spitzen (7) hat,die 5-50 cm,vorzugsweise 6 cm lang sind und der senkrechten Wand (1) einen festen Halt im Boden geben.

6. Vorrichtung nach Patentanspruch 1,2,3 und 5,**dadurch gekennzeichnet,dass** die Wand (1) an einer seitlichen Kante einen senkrecht nach unten weisenden Stab (5) und an der anderen seitlichen Kante eine Hülse (4) besitzt in welche der Stab (5) einer anderen Wand (1) gesteckt werden kann,sodass dadurch zwei oder mehrere Wände (1) drehbar miteinander verbunden werden können und durch die kreisförmige Biegung des Nadelbandes (2) mit der waagerechten Platte (8) auch bei Drehungen der Platten (1) ein dichter Abschluss zwischen zwei oder mehreren Platten (1) gebildet wird.

7. Vorrichtung nach Patentanspruch 1,2,3,5 und 6,**dadurch gekennzeichnet,dass** die Stäbe (5) und die Hülsen (4) durchgehend hohl sind,sodass nach dem ineinander stecken von Stäben (5) in Hülsen (4) von zwei oder mehreren Wänden (1) ein oder mehrere Stangen durch die Stäbe (5) mit den Hülsen (4) ganz nach unten bis in die Erde durch gestossen werden können und dadurch zwei oder mehrere Wände (1) einen festeren Halt im Boden erhalten,ausserdem aber auch durch Umbiegen des oberen Endes dieser durchgesteckten Stangen Bögen zu den anderen Wänden (1) gebildet werden können.
